# FASCICULE DE BREVET EUROPEEN

(11) **EP 0 979 370 B1**
(45) Date de publication et mention de la délivrance du brevet: **25.06.2003**
(21) Numéro de dépôt: 98922897.8
(22) Date de dépôt: 29.04.1998
(51) Int. Cl.: F16L 55/033, F16L 9/12, F16L 11/04

(54) **TUYAU POUR LE TRANSPORT DE FLUIDES GAZEUX, NOTAMMENT DANS LES AUTOMOBILES**
ROHR ZUM TRANSPORT VON GASFOERMIGEN MEDIEN, INSBESONDERE IN KRAFTFAHRZEUGEN
PIPE FOR CIRCULATING GASEOUS FLUIDS IN MOTOR VEHICLES

(30) Priorité: 30.04.1997 FR 9705361
(43) Date de publication de la demande: 16.02.2000
(73) Titulaire: WECOSTA, 59058 Roubaix Cedex 1 (FR)
(72) Inventeur: LEPOUTRE, Henri, F-59058 Roubaix Cedex 1 (FR)
(74) Mandataire: Eidelsberg, Victor Albert
(86) Numéro de dépôt international: FR9800863
(87) Numéro de publication internationale: WO98049486

(56) Documents cités:
- EP-A- 0 638 755
- WO-A-91/00466
- FR-A- 2 589 551
- GB-A- 2 146 070
- GB-A- 2 227 544
- US-A- 3 374 856
- PATENT ABSTRACTS OF JAPAN vol. 96, no. 7, 31 juillet 1996 & JP 08 081994 A (KUBOTA CORP), 26 mars 1996

## Description

La présente invention est relative aux tuyaux pour le transport de fluides gazeux, et elle s'applique en particulier, mais non exclusivement, à un tel tuyau qui est utilisé pour véhiculer de l'air dans les automobiles, et spécialement dans les moteurs.

L'invention s'applique tout spécialement à un tel tuyau qui est utilisé, dans un moteur automobile, en aval du filtre à air, pour conduire l'air de combustion vers le bloc-moteur. Dans cette application particulière, on sait que l'air de combustion délivré au moteur doit être propre, ce qui est assuré par le filtre à air. Il est donc nécessaire que ce tuyau, dans son ensemble, ne puisse pas communiquer pneumatiquement avec l'extérieur, un tel échange gazeux entre l'extérieur et l'intérieur étant de nature à souiller l'air propre conduit par le tuyau.

Par ailleurs, on sait que dans l'industrie automobile on prête la plus grande attention à l'atténuation des bruits.

L'invention a donc pour but de fournir un tuyau du type indiqué ci-dessus qui, tout en évitant un échange gazeux entre l'intérieur et l'extérieur, permet d'atténuer les bruits.

A cet effet, le tuyau selon l'invention est caractérisé en ce qu'il comporte un tube intérieur poreux perméable aux fluides gazeux et propre à atténuer la transmission des bruits, et un tube extérieur essentiellement rigide formant enveloppe, à distance du tube intérieur, imperméable aux fluides gazeux. Dans le document GB-A-2.146.070, il est décrit un tube extérieur en une matière imperméable. Cependant, ce tube extérieur est perméable puisqu'il est prévu une multitude d'ouvertures.

Le tuyau selon l'invention fonctionne donc à la fois comme un tuyau de transport de fluides gazeux sans échange gazeux avec l'extérieur et en atténuateur des bruits.

A l'inverse des silencieux traditionnels, comportant un tube intérieur qui est interrompu ou qui présente des ouvertures, et un tube extérieur, c'est-à-dire fonctionnant en entrant en résonance, le tuyau selon l'invention, dans sa fonction d'atténuateur des bruits, fonctionne sans entrer en résonance du fait que le tube intérieur est à surface poreuse ; le fluide gazeux ne peut passer de l'intérieur à l'extérieur du tube poreux, et inversement, qu'en traversant la paroi poreuse de celui-ci. Les porosités du tube intérieur étant par nature de très faibles dimensions, la viscosité du fluide gazeux devient prépondérante, ce qui entraîne une perte d'énergie par frottement lors de la traversée, et empêche la création de résonances, car cette dépense d'énergie atténue tous les déplacements du fluide.

Le tube intérieur est avantageusement fibreux, par exemple à base de fibres de polyester, tandis que le tube extérieur essentiellement rigide est par exemple en matière plastique, notamment en polypropylène.

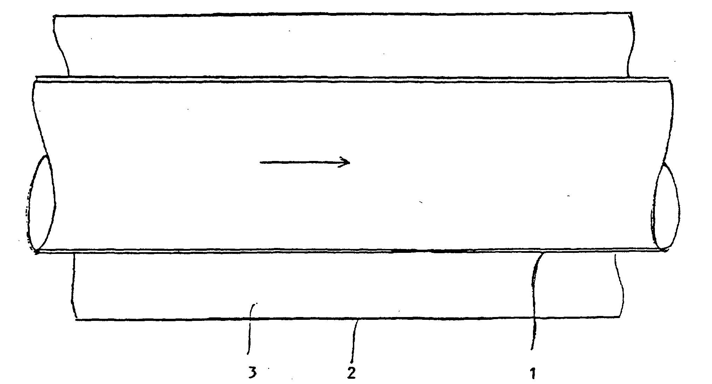

On comprendra bien l'invention à la lecture du complément de description qui va suivre et en référence au dessin annexé qui fait partie de la description et dont la Figure unique est une vue schématique en coupe longitudinale arrachée d'un tuyau établi selon l'invention.

Sur le dessin, on a représenté en 1 le tuyau intérieur poreux, par exemple rectiligne, et en 2 le tube extérieur essentiellement rigide, par exemple coaxial, formant enveloppe. Les tubes 1, 2 sont par exemple de section droite circulaire et, dans l'application préférée au transport d'air propre de combustion dans un moteur, ils sont en général de même longueur et s'étendent, sur la même longueur, du filtre à air jusqu'au bloc-moteur.

Comme indiqué ci-dessus, le tube intérieur poreux 1 est de nature fibreuse, par exemple à base de fibres de polyester, tandis que le tube extérieur essentiellement rigide est par exemple en matière plastique, notamment en polypropylène. De préférence, ces deux tubes sont coaxiaux.

Le degré de porosité du tube intérieur est établi en fonction des besoins. Par exemple, dans l'application préférée à la conduite de l'air propre de combustion, entre le filtre à air et le bloc-moteur d'un véhicule automobile, la porosité, exprimée en débit d'air à travers la paroi poreuse par unité de surface et en fonction de la dépression à travers celle-ci, est de 20 l/m par dm² de surface et par 10² Pa de dépression.

Le tube extérieur 2 est plein, c'est-à-dire qu'il évite tout échange gazeux entre l'intérieur et l'extérieur du tuyau selon l'invention. Dans l'application préférée ci-dessus, il évite donc notamment la pénétration de l'air sale environnant à l'intérieur du tube 1 véhiculant de l'air propre.

Toutefois, on a constaté que, selon l'invention, le tube extérieur 2, du fait de sa rigidité évitant le rayonnement des sons et par sa coopération avec le tube intérieur poreux 1, intervient également fonctionnellement dans les phénomènes d'atténuation des bruits.

Ainsi, si le volume annulaire 3 entre les tubes 1 et 2 est nul, ou quasiment nul, c'est-à-dire si le diamètre intérieur du tube 2 est égal au diamètre extérieur du tube 1, ou très voisin de celui-ci, le tuyau composé se comporte, en ce qui concerne l'atténuation des bruits, quasiment comme un tuyau à surface pleine, c'est-à-dire non poreuse, une très faible atténuation se produisant néanmoins, à toutes les fréquences, en raison de la structure poreuse et feutrée du tube intérieur 1.

Il est donc nécessaire que l'espace annulaire 3 ait un volume non nul.

On a également constaté que, selon l'invention, l'atténuation des bruits due à la porosité du tube intérieur 1 croît en même temps que le volume annulaire 3. Mais on est alors rapidement limité pour des raisons d'encombrement, d'autant que l'augmentation de l'atténuation des bruits s'annule dès que le volume annulaire 3 a atteint une certaine valeur.

Ainsi, on a constaté que, dans une réalisation pour laquelle les tubes 1 et 2 sont coaxiaux, pour un tube poreux 1 en fibres de polyester d'un diamètre d'environ 5 cm, le tube extérieur 3 peut avoir un diamètre de 5,25 à 15 cm, avec une excellente atténuation des bruits sur une gamme de fréquence allant jusqu'à au moins 1 kHz. Une plage préférée pour le diamètre du tube extérieur est de 7 à 10 cm.

D'une manière générale, on estime que le rapport des diamètres entre le tube extérieur et le tube intérieur 1 peut se situer de 1,05 à 3, et de préférence de 1,2 à 2.

Bien entendu, l'invention n'est pas limitée aux modes de réalisation, non plus qu'au mode d'application, qui ont été décrits ; on pourrait au contraire concevoir diverses variantes sans sortir pour autant de son cadre. C'est ainsi, par exemple, que le tube extérieur 2 pourrait ne s'étendre que sur une partie de la longueur du tube intérieur 1 dans le cas où un échange gazeux entre l'intérieur et l'extérieur du tube poreux 1 est acceptable. De même, le tube extérieur 2 pourrait s'étendre sur une longueur supérieure à la longueur du tube intérieur 1. De plus, la surface poreuse intérieure au tube extérieur 2 pourrait ne pas être continue, par exemple soit que le tube poreux soit interrompu, ou discontinu, soit qu'il présente au moins une ouverture dans sa paroi. Par ailleurs, le tuyau composé selon l'invention peut constituer seulement une partie de conduite, dont le reste est formé par au moins un prolongement du tuyau poreux ou par un tuyau distinct.

## Revendications

1. Tuyau pour le transport de fluides gazeux, notamment dans les automobiles, comportant un tube intérieur poreux (1) perméable aux fluides gazeux et propre à atténuer la transmission des bruits, et un tube extérieur essentiellement rigide (2) formant enveloppe, à distance du tube intérieur, **caractérisé en ce que** le tube extérieur est imperméable aux fluides gazeux.

2. Tuyau selon la revendication 1, **caractérisé en ce que** le tube extérieur (2) est plein.

3. Tuyau selon l'une des revendications 1 et 2, **caractérisé en ce que** les deux tubes (1, 2) sont coaxiaux.

4. Tuyau selon l'une des revendications 1 à 3, **caractérisé en ce que** le tube intérieur (1) est fibreux, notamment à base de fibres de polyester.

5. Tuyau selon l'une des revendications 1 à 4, **caractérisé en ce que** le tube extérieur (2) est en matière plastique, notamment en polypropylène.

6. Tuyau selon l'une des revendications 1 à 5 **caractérisé en ce que** les tubes (1,2) sont de section droite circulaire, le rapport des diamètres du tube extérieur (2) et du tube intérieur (1) étant de 1,05 à 3, et de préférence de 1,2 à 2.

7. Tuyau selon l'une des revendications 1 à 6, **caractérisé en ce que** le tube extérieur (2) s'étend sur toute la longueur du tube intérieur (1), notamment quand le tuyau est destiné à transporter de l'air propre, en particulier de l'air de combustion d'un moteur, entre le filtre à air et le bloc-moteur.

8. Tuyau selon l'une des revendications 1 à 6, **caractérisé en ce que** le tube extérieur (2) s'étend sur une partie seulement de la longueur du tube intérieur (1).

9. Tuyau selon l'une des revendications 1 à 6, **caractérisé en ce que** le tube extérieur (2) s'étend sur une longueur supérieure à la longueur du tube intérieur (1)

10. Tuyau selon l'une des revendications 1 à 9, **caractérisé en ce que** la paroi poreuse du tuyau intérieur (1) est continue.

11. Tuyau selon l'une des revendications 1 à 9, **caractérisé en ce que** la paroi poreuse du tuyau intérieur (1) est discontinue, le tuyau intérieur (1) étant par exemple soit interrompu, ou discontinu, soit muni d'au moins une ouverture dans sa paroi.

12. Tuyau selon l'une des revendications 1 à 11, **caractérisé en ce qu'**il constitue le tuyau d'alimentation en air propre de combustion pour un moteur, en aval du filtre à air.

## Patentansprüche

1. Rohr für den Transport von gasförmigen Fluiden, insbesondere in Kraftfahrzeugen, mit einem inneren porösen Rohr (1), das für die gasförmigen Fluide durchlässig ist und die Geräuschübertragung dämpfen kann, und mit einem im wesentlichen steifen äußeren Rohr (2), das in Abstand zum inneren Rohr eine Hülle bildet, **dadurch gekennzeichnet, dass** das äußere Rohr für die gasförmigen Fluide undurchlässig ist.

2. Rohr nach Anspruch 1, **dadurch gekennzeichnet, dass** das äußere Rohr (2) massiv ist.

3. Rohr nach einem der Ansprüche 1 und 2, **dadurch gekennzeichnet, dass** die beiden Rohre (1, 2) koaxial sind.

4. Rohr nach einem der Ansprüche 1 bis 3, **dadurch gekennzeichnet, dass** das innere Rohr (1) faserig ist, insbesondere auf der Basis von Polyesterfasern.

5. Rohr nach einem der Ansprüche 1 bis 4, **dadurch gekennzeichnet, dass** das äußere Rohr (2) aus Kunststoffmaterial besteht, insbesondere aus Polypropylen.

6. Rohr nach einem der Ansprüche 1 bis 5, **dadurch gekennzeichnet, dass** die Rohre (1, 2) einen kreisförmigen Querschnitt aufweisen, wobei das Verhältnis der Durchmesser des äußeren Rohrs (2) und des inneren Rohrs (1) 1,05 bis 3, und vorzugsweise 1,2 bis 2 ist.

7. Rohr nach einem der Ansprüche 1 bis 6, **dadurch gekennzeichnet, dass** das äußere Rohr (2) sich über die ganze Länge des inneren Rohrs (1) erstreckt, insbesondere wenn das Rohr dazu bestimmt ist, saubere Luft, insbesondere die Verbrennungsluft eines Motors, zwischen dem Luftfilter und dem Motorblock zu transportieren.

8. Rohr nach einem der Ansprüche 1 bis 6, **dadurch gekennzeichnet, dass** das äußere Rohr (2) sich nur über einen Teil der Länge des inneren Rohrs (1) erstreckt.

9. Rohr nach einem der Ansprüche 1 bis 6, **dadurch gekennzeichnet, dass** das äußere Rohr (2) sich über eine größere Länge als die Länge des inneren Rohrs (1) erstreckt.

10. Rohr nach einem der Ansprüche 1 bis 9, **dadurch gekennzeichnet, dass** die poröse Wand des inneren Rohrs (1) kontinuierlich ist.

11. Rohr nach einem der Ansprüche 1 bis 9, **dadurch gekennzeichnet, dass** die poröse Wand des inneren Rohrs (1) diskontinuierlich ist, wobei das innere Rohr (1) zum Beispiel unterbrochen, oder diskontinuierlich, oder mit mindestens einer Öffnung in seiner Wand versehen ist.

12. Rohr nach einem der Ansprüche 1 bis 11, **dadurch gekennzeichnet, dass** es das Speiserohr für saubere Verbrennungsluft für einen Motor stromabwärts hinter dem Luftfilter ist.

## Claims

1. Tube for ducting of gaseous fluids, in particular for automotives, comprising a porous interior tube (1) permeable to gaseous fluid and proper for dampening noise transmission and an exterior tube (2) essentially rigid which forms an envelope distant from the interior tube, **characterized in that** said exterior tube is non-permeable to gaseous fluids.

2. A pipe according to claim 1, **characterized in that** the exterior tube (2) is solid.

3. A pipe according to claim 1 or 2, **characterized in that** both tubes (1, 2) are co-axial.

4. A pipe according to claim 1 to 3, **characterized in that** the interior tube is (1) fibrous, in particular based on polyester fibers.

5. A pipe according to one of claims 1 to 4, **characterized in that** the exterior tube (2) is in a plastic material, in particular polypropylene.

6. A pipe according to one of claims 1 to 5, **characterized in that** the tubes (1, 2) are of circular section, the ratio of the diameters of the exterior tube (2) and the interior tube (1) being in the range of 1.05 to 3, and preferably of 1.2 and 2.

7. A pipe according to one of claims 1 to 6, **characterized in that** the exterior tube (2) extends over all the length of the interior tube (1), in particular when the pipe is for ducting of clean air, in particular the combustion air of an engine, between the air filter and the engine block.

8. A pipe according to one of claims 1 to 6, **characterized in that** the exterior tube (2) extends only partially over the length of the interior tube (1).

9. Pipe according to one of claims 1 to 6, **characterized in that** the exterior tube (2) extends over a longer length than that of the interior tube (1).

10. A pipe according to one of claims 1 to 9, **characterized in that** the porous wall of the interior tube (1) is continuous.

11. A pipe according to one of claims 1 to 9, **characterized in that** the porous wall of the interior tube (1) is discontinuous, the interior tube (1) being for exemple interrupted or discontinued, or featuring at least on opening in its wall.

12. A pipe according to one of claims 1 to 11, **characterized in that** it constitutes the feeding pipe for clean air intended for engine combustion, after the air filter.
